Europäisches Patentamt

European Patent Office

Office européen des brevets

(11) Numéro de publication: **0 283 814 B1**

## FASCICULE DE BREVET EUROPEEN

(45) Date de publication de fascicule du brevet: **03.06.92** (51) Int. Cl.$^5$: **B60T 17/02**

(21) Numéro de dépôt: **88103497.9**

(22) Date de dépôt: **07.03.88**

(54) **Dispositif d'alimentation d'installations de freinage de rames ferroviaires.**

(30) Priorité: **13.03.87 FR 8703455**

(43) Date de publication de la demande:
**28.09.88 Bulletin 88/39**

(45) Mention de la délivrance du brevet:
**03.06.92 Bulletin 92/23**

(84) Etats contractants désignés:
**BE CH DE ES FR GB IT LI SE**

(56) Documents cités:
**EP-A- 0 129 307**
**CH-A- 84 848**
**FR-A- 690 831**

(73) Titulaire: **GEC ALSTHOM SA**
**38, avenue Kléber**
**F-75116 Paris(FR)**

(72) Inventeur: **Dumas, Jean-Claude**
**1 allée Alfred Sisley**
**F-95230 Soisy Sous Montmorency(FR)**
Inventeur: **Van Hemelryck, Alain**
**10 avenue De Lattre de Tassigny**
**F-93140 Bondy(FR)**

(74) Mandataire: **Weinmiller, Jürgen et al**
**Lennéstrasse 9 Postfach 24**
**W-8133 Feldafing(DE)**

## Description

La présente invention concerne un dispositif d'alimentation d'installations de freinage de rames ferroviaires, soit à air comprimé, soit à vide, selon le préambule de la revendication (cf. CH-A-84848).

Sur certains réseaux ferroviaires, tandis que les locomotives comportent toujours un organe de freinage à l'air comprimé, une partie des wagons disponibles est encore munie de freins à vide, tandis que l'autre possède des freins à air comprimé. Les locomotives en service sur ces réseaux doivent donc pouvoir assurer le freinage de rames munies soit de freins à vide, soit de freins à air comprimé. Les pompes à vide disponibles ayant un débit limité, il convient parfois de munir la locomotive de deux pompes à vide, en plus du compresseur. Cela implique l'installation sur la locomotive de trois appareils à piston, ce qui pose des problèmes de masses, d'implantation et de coût. Ces trois appareils avec leurs auxiliaires sont encombrant, et leur entraînement par poulies et courroies devient très difficile à résoudre dans l'espace limité disponible.

La présente invention a donc pour but de procurer un dispositif d'alimentation d'installations de freinage de rames ferroviaires qui s'adapte à des rames composées indifféremment de wagons à frein à air comprimé ou de wagons à freins à vide, qui soit d'un moindre encombrement et d'un moindre poids que les dispositifs connus, et par ailleurs réduise les vibrations et les opérations d'entretien.

L'invention a donc pour objet un dispositif d'alimentation d'installations de freinage de rames ferroviaires, soit à air comprimé, soit à vide, comprenant un compresseur d'air pour alimenter le circuit de freinage à air comprimé et une pompe à vide pour alimenter le circuit de freinage à vide, le dispositif étant caractérisé en ce que la pompe à vide est une pompe à vide statique alimentée par de l'air comprimé refoulé par le compresseur grâce à une tuyauterie branchée sur le circuit de freinage à air comprimé.

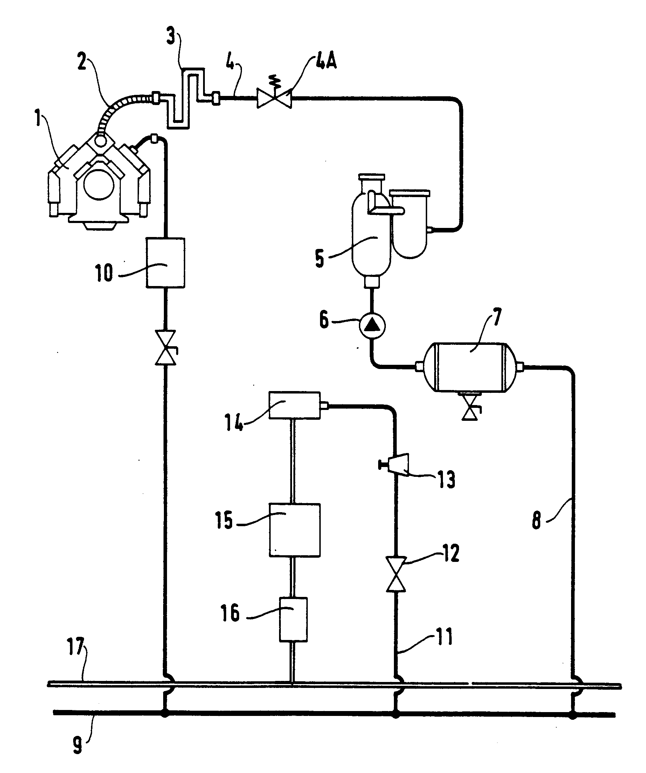

Il est décrit ci-après, à titre d'exemple et en référence à la figure schématique unique du dessin annexé, un dispositif d'alimentation d'installations de freinage de rames ferroviaires, pouvant se composer de wagons, soit à freins à air comprimé, soit à freins à vide, monté à bord d'une locomotive.

Le compresseur à grand débit 1 est relié par un flexible 2 à un refroidisseur 3, puis par un conduit 4, muni d'une soupape de sécurité 4A, à un sécheur d'air 5. Celui-ci débouche par un clapet de retenue 6 sur un réservoir d'air comprimé 7.

Ce dernier permet de diminuer la fréquence de fonctionnement du compresseur. Le réservoir 7 alimenté par une tuyauterie de raccord 8 la conduite principale d'aire comprimé 9, qui fournit l'air comprimé des freins de la locomotive et éventuellement de la rame qu'elle entraîne.

Une régulation 10 reliée à la conduit d'air comprimé permet la mise en marche du compresseur lorsque la pression dans la conduite est tombée à une valeur minimale.

Par ailleurs, la conduite d'aire comprimé alimente par une tuyauterie 11, une vanne 12 et un détendeur 13, une pompe à vide statique 14, qui ne comporte pas d'organe mobile et produit donc beaucoup moins de bruit et de vibrations qu'une pompe à vide à pistons, et par ailleurs est d'un encombrement réduit. Cette dernière est reliée par un clapet interrupteur 15 et un filtre 16 à la conduite générale de vide 17, sur laquelle peuvent être raccordés les freins à vide des wagons de certaines rames.

## Revendications

1. Dispositif d'alimentation d'installations de freinage de rames ferroviaires, soit à air comprimé, soit à vide, comprenant un compresseur d'air (1) pour alimenter le circuit de freinage à air comprimé (9) et une pompe a vide pour alimenter le circuit de freinage à vide (17), le dispositif étant caractérisé en ce que la pompe à vide est une pompe à vide statique (14) alimentée par de l'air comprimé refoulé par le compresseur (1) grâce à une tuyauterie (11) branchée sur le circuit de freinage à air comprimé (9).

## Claims

1. A device for supplying air or vacuum to railway braking installations applying either compressed air or else a vacuum, comprising an air compressor (1) for feeding the compressed air braking circuit (9) and a vacuum pump for feeding the vacuum actuated braking circuit (17), the device being characterized in that the vacuum pump is a static vacuum pump (14) fed by compressed air accumulated by the compressor (1) by virtue of a pipe line (11) connected to the compressed air braking circuit (9).

## Patentansprüche

1. Vorrichtung zur Versorgung von Bremsanlagen in Eisenbahnzügen mit Druckluft oder Vakuum, mit einem Luftkompressor (1) zum Speisen des Druckluftbremskreises (9) mit Druckluft und einer Vakuumpumpe zum Speisen des Vakuumbremskreises (17), dadurch gekennzeichnet, daß die Vakuumpumpe eine statische Vakuumpumpe (14) ist, die mit vom Kompressor (1) verdichteter Druckluft durch eine Leitung (11) versorgt wird, welche an den Druckluftbremskreis (9) angeschlossen ist.